# EUROPEAN PATENT SPECIFICATION

(11) **EP 1 908 142 B1**
(45) Date of publication and mention of the grant of the patent: **07.09.2011**
(21) Application number: 06786043.7
(22) Date of filing: 30.06.2006
(51) Int. Cl.: H01M 8/02, H01M 8/12

(54) **TUBULAR SOLID OXIDE FUEL CELL CURRENT COLLECTOR**
RÖHRENFÖRMIGER FESTOXID-BRENNSTOFFZELLEN-STROMSAMMLER
COLLECTEUR DE COURANT POUR PILE A COMBUSTIBLE A OXYDE SOLIDE TUBULAIRE

(30) Priority: 30.06.2005 US 171655
(43) Date of publication of application: 09.04.2008
(73) Proprietor: Worldwide Energy, Inc. of Delaware, Oak Ridge, TN 37830 (US)
(72) Inventor: BISCHOFF, Brian, L., Knoxville, TN 37922 (US); SUTTON, Theodore, G., Kingston, TN 37763 (US); ARMSTRONG, Timothy, R., Clinton, TN 37716 (US)
(74) Representative: Ferreccio, Rinaldo
(86) International application number: PCT/US2006/025708
(87) International publication number: WO 2007/005675

(56) References cited:
- WO-A2-01/89011
- WO-A2-03/103079
- WO-A2-2005/122303
- WO-A2-2005/122317
- JP-A- 11 111 313
- JP-A- 2004 055 368
- JP-A- 2004 319 152

## Description

### BACKGROUND OF THE INVENTION

### Field of the Invention

The invention relates to tubular electrochemical reactors including tubular solid oxide fuel cells (TSOFC) and tubular electrolyzers.

### Description of the Related Art

Fuel cells generate power by extracting the chemical energy of natural gas or other hydrogen-containing fuel without combustion. Advantages include high efficiency and very low release of polluting gases (e.g., NOₓ) into the atmosphere.
The solid oxide fuel cell (SOFC) offers advantages of high efficiency, low materials cost, minimal maintenance, and direct utilization of various hydrocarbon fuels without external reforming.

In general, a solid oxide fuel cell (SOFC) comprises a pair of electrodes (anode and cathode) separated by a ceramic, solid-phase electrolyte. To achieve adequate ionic conductivity in such a ceramic electrolyte, the SOFC operates at an elevated temperature, typically in the order of about 700° to 1000° C. The material in typical SOFC electrolytes is a fully dense (i.e. non-porous) yttria-stabilized zirconia (YSZ) which is an excellent conductor of negatively charged oxygen (oxide) ions at high temperatures. Typical SOFC anodes are made from a porous nickel/zirconia cermet while typical cathodes are made from magnesium doped lanthanum manganate (LaMnO₃), or a strontium doped lanthanum manganate (also known as lanthanum strontium manganate (LSM)). In operation, hydrogen or carbon monoxide (CO) in a fuel stream passing over the anode reacts with oxide ions conducted through the electrolyte to produce water and/or CO2 and electrons. The electrons pass from the anode to outside the fuel cell via an external circuit, through a load on the circuit, and back to the cathode where oxygen from an air stream receives the electrons and is converted into oxide ions which exchange into the electrolyte.

SOFCs operating with natural gas as a fuel at 1000°C can achieve power generation efficiencies in the range of 40 to 45 percent (simple cycle). Hybrid systems combining SOFCs and gas turbines can achieve efficiencies up to 70 percent. Scientists at the United States Department of Energy's National Energy Technology Laboratory (NETL) recently developed a concept for increasing efficiencies of SOFCs to greater than 70% in a hybrid system. Their approach, called the Ultra Fuel Cell, is based on staged SOFCs where spent (but not completely combusted) fuel exiting a first SOFC stack operating at low temperature (500°-700°C) is fed into a second SOFC stack operating at a higher temperature (> 800°C). Materials technology for high-temperature (800°-1000°C) stacks has been developed, and could soon be commercialized for large-scale (up to 10 MW) power generation.

The ceramic materials used in high-temperature SOFCs based on current planar and tubular designs are essentially defined. Yttria-stabilized-cubic-zirconia (YSCZ) is the most widely used ceramic electrolyte membrane material because it has a high ionic conductivity and is stable in both oxidizing and reducing environments. The oxygen ionic conductivity is independent of oxygen partial pressure over a wide range of temperatures. Under these conditions, the transference number for ionic conductivity is close to unity. The use of fully stabilized YSCZ avoids problems of phase transformation associated with partially stabilized materials during cell operation. The anode material is a porous Ni-YSCZ cermet, and the cathode material is a porous (La,Sr)MnO₃ (LSM) ceramic. Present designs involve the use of relatively thick YSCZ membranes, which require high operating temperatures (900°-1000°C) to achieve optimum performance.

Approaches to reduce SOFC operating temperatures all begin with reduction of the electrolyte resistance, which can be achieved by: (1) using thin film YSCZ electrolyte membranes, (2) developing nanocrystalline materials, or (3) replacing YSCZ with a higher conductivity ceramic electrolyte material. More substantial reductions in operating temperature can be achieved by combining these approaches.

Reducing the electrolyte resistance alone, however, is not sufficient. The anode and cathode materials must be re-engineered to provide the required electrochemical performance at low temperatures. Mutual compatibility of the new materials must be established, and electrochemical cell designs and stack configurations incorporating the new materials must be developed. There has been considerable published research focused on individual components (electrolytes, anode, and cathode), as well as some preliminary efforts aimed at development of low-temperature SOFCs by co-sintering.

Current collectors for conventional stacks of planar solid oxide fuel cells comprise metallic screens or some type of Ni or stainless steel plate. The planar current collectors connect the cells in series, or are used at the end of the stacks to take out the generated current.

SOFCs can be of a tubular construction, For example, tubular fuel cells manufactured by Acumentrics Corporation employ a nickel wire current collector that has been spiraled around a needle former to produce a tight coil. The coil is than fed into the tubular electrode by jamming it inside to produce an electrical contact as disclosed in "Electrode-Supported Solid Strate Electrochemical Cell", N. Sammes, T. Murray, M. Brown and W. Ziegler, PCT International Publication No. WO 01/91218 A2, published November 29, 2001.

In another tubular fuel cell design, Acumentrics wraps a wire coil around the inside of the electrode were it electrically contacts the electrode as disclosed in "Segmented Electrode Tubular Solid Oxide Fuel and Method of Manufacture.", C. Finnerty, G. Tompsett, B. Fenton and Y. Du, PCT International Publication No. WO 02/31901 A2, published April 18,2002. In an electricity-generating fuel cell from Celltech Power, a coil is used to urge a flat electrical contact against a flat anode surface as disclosed in A Carbon-Oxygen Electricity-Generating Unit", T. Tao, PCT International Publication No. WO 99/45607, published September 10, 1999.

Although the Acumentrics TSOFC having a current collector coil provides some improvement in TSOFC performance due to a small increase in contact area as compared to a conventional current collector, further improvememts in the current collector design are needed to further improve TSOFC performance.

WO 03/103079 discloses a tubular fuel cell comprising a spring coil current collector made of Pt, Pd or Ag wire with a thickness of less than 2 mm and arranged in tangential contact with the inner electrode, wherein the pitch of the spring coil determins its current collection properties and the accessibility of the inner electrode to the reactant gas.

JP 2004 055368 discloses a solid electrolyte fuel cell provided with a metallic tube-like body 2 having an inside diameter of 1 mm, an outside diameter of 2 mm and a length of 20 mm and composed by forming a metallic fine wire W formed of Ni- 16Cr-8Fe alloy having a diameter of 0.2 mm into a coil spring-like shape at a wire interval of 50 [mu]m.

JP 11 111313 discloses a tubular fuel cell having a spring coil made of Ni-alloy disposed concentrically to the fuel cell and in a tangential contact with the conductive felt of the inner electrode.

JP 2004 319152 discloses a cell body for a tubular fuel battery, which has a good thermal shock resistance and little current collection loss, wherein there is provided a porous metal substrate surrounding the external electrode of the fuel cell.

WO 2005/122317 discloses a tubular fuel cell having a tubular spring coil made of Ni as a current collector in contact with the surface of the inner electrode.

WO 2005/122303 discloses a tubular fuel cell comprising electrodes disposed on both sides of an electrolyte. A tubular spring coil made of Pt is used as an inner current collector.

### BRlEF SUMMARY OF THE INVENTION

In a preferred embodiment, the invention comprises a tubular electrochemical reactor. The reactor includes a tubular coil spring current collector ("spring coil") disposed concentrically within the inner electrode such that when sprung back to its normal state during assembly, the spring current collector is forced into firm uniform tangential electrical contact with the inner surface of the inner electrode.

The novel spring-back assembly method, coupled with suitable spring coil dimensions and materials described herein provides a novel resulting TSOFC arrangement which has been found to significantly improve TSOFC performance through maximizing the contact area between the interior surface of the tubular fuel cell. Preferred spring materials for use with the present invention have high strength properties, a high elastic limit and a high modulus of elasticity. Because springs are resilient structures designed to undergo large deflections, preferred spring materials have properties of extensive elastic range. Other factors such as fatigue strength, cost, availability, formability, corrosion resistance, magnetic permeability and electrical conductivity can also be important properties and should be considered in light of cost/benefit.

The current collector is generally made from a metal (or other electrical conductor), such as platinum, palladium or silver, and alloys thereof, as well as electrically conductive nickel-based alloys. The elastic modulus of the spring wire is generally between 6,890 MPa and 344,500 MPa, and is preferably between 68,900 MPa and 344,500 MPa, more preferably 137,800 MPa and 344,500 MPa. The diameter of the spring coil is slightly larger, such as 1.016 cm to 2.032 cm larger in its normal (unstretched) state, as compared to the inside diameter of the tubular element so that when stretched during assembly it can be pulled through the tubular element and will spring back when released to rest tightly against the inside of the tubular element. The resulting number of turns per cm (pitch) of the spring coil is from 0.39 to 13.78 per cm, preferably 1.97 to 13.78, such as 5.9 to 13.78. The diameter of the spring wire is generally less than or equal to .3175 cm. A ceramic tube is provided, wherein the spring coil is disposed inside a bore of the ceramic tube.

The use of a true spring according to the present invention is in contrast with the Acumentrics arrangements noted in the Background which do not disclose or suggest a spring current collector, just a coiled wire. A coiled wire without a high modulus and stiffness cannot act as a spring and holds its form as does spring coil current collectors according to the invention.

### BRIEF DESCRIPTION OF THE DRAWINGS

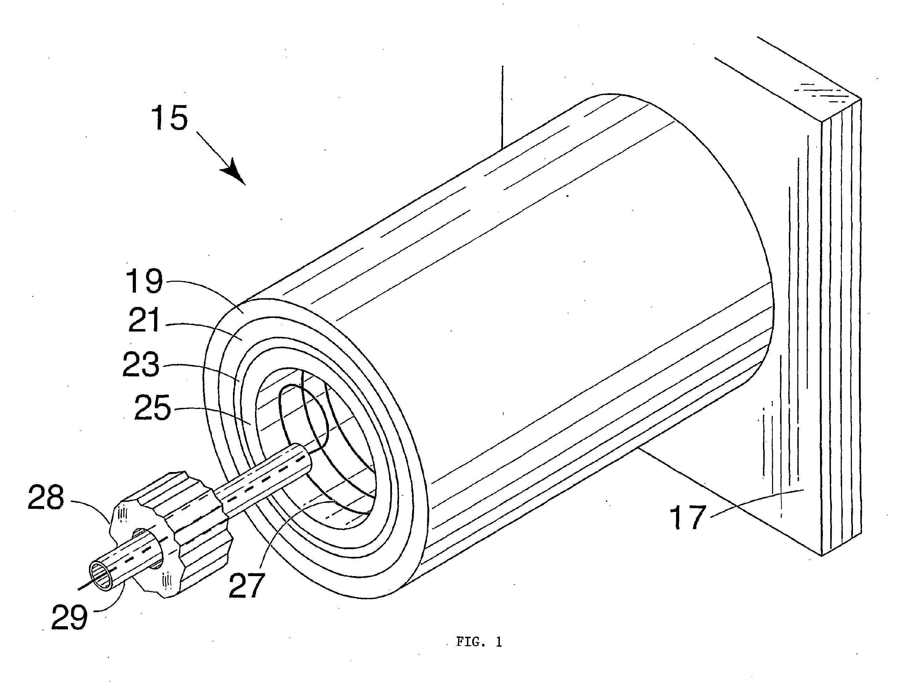

Figure 1 is a representative drawing of a tubular solid oxide fuel cell (TSOFC) element showing the tubular coil spring current collector of the subject invention.

### DETAILED DESCRIPTION OF THE INVENTION

Figure 1 shows a tubular solid oxide fuel cell (TSOFC) element 15 having a circular cross-section. The TSOFC element is supported from a metallic substrate **17** that is part of a structure supporting one or a number of TSOFC elements. The TSOFC element **15** is open at both ends. A porous metal support tube **19** is coated on the inside with a porous anode **21**, such as Ni-Ni Yttria stabilized zirconia (YSZ), for example. The anode **21** is coated on the inside with a dense electrolyte **23** such as Y₂O₃-ZrO₂, for example. The dense electrolyte **23** is coated on the inside with a porous cathode **25** such as LaMnO₃, for example. The compositions used to make the TSOFC tube are not critical to the present invention. Moreover, the anode **21** and cathode **25** layers can be interchanged in such a structure, as is well understood in the field of the invention.

The internal current collector is a tubular coil spring **27** that is inserted into the tubular cathode **25** with one end of the spring **27** extending out the end of the TSOFC element **15**. It is important that the spring **27** does not contact the anode **21** or any part of the fuel cell (other than cathode **25**) such as the housing **28** or substrate **17** that may be in electrical contact with the anode **21**. One way to ensure this is to use a ceramic feedthrough tube **29** similar to those used for thermocouples. The current collecting spring **27** is fed through the bore of the ceramic tube **29** to prevent contact with other parts of the fuel cell **15**. Depending on the design, the inner electrode (**25**) will be either the anode or the cathode. In the example shown, it is the cathode. In either configuration, current is collected by the spring **27** in firm tangential contact with the inner wall of the electrode **25** due to the springback force of the tubular coil spring **27** against electrode **25**.

During assembly, the tubular coil spring **27** is inserted in the fuel cell **15** in a compressed state. The compressed spring is then slid into the SOFC tube **15** and is then released. As the spring returns to the normal or rest state, the spring's coils push outward producing a firm and uniform contact with the inside of the tube **15** in a continuous or semi-continuous manner throughout the length of the tube. The actual contact area is a function of how the spring is wound prior to insertion. The current collector **27** is made of a spring metal that is able to withstand operational conditions of the fuel cell, i.e., the cathode in air; and the anode in fuel such as hydrogen, CO, CO₂, H₂O, or H₂S. For example, the spring may be a noble metal such as platinum, palladium or silver, or a conductive nickel-based alloy such as Inconel.

The current collector spring **27** produces a continuous elastic force that is directed at the wall of the cathode **25** along the length of the wire. For example, if a tube has an inner diameter of 1.016 cm and a length of 30.48 cm employs a helical collector with 1.97 coils per cm, the collector wire **27** would contact the inside of the cathode **25** along a path approximately 190.5 cm long. This large contact area improves the transfer of current from the cathode when compared to a single attachment point or a wire mesh jammed into the tube.

In addition to its ability to collect current from the inner electrode **25** of the fuel cell **15**, the tubular coil spring **27** enhances contact of the gas flowing in the SOFC element with the inner electrode surface. In a fuel cell, this has the potential to reduce the gas concentration polarization on the electrode in question. In the case where the innermost electrode is the cathode, air flows inside the tube with oxygen dissociating on the cathode and permeating through the electrolyte. The coiled spring **27** held against the inside of the cathode **25** induces eddy currents in the gas which improve gas mixing and reduce concentration polarization, where the concentration of the oxygen would be depleted at the wall of the tube.

The materials of construction for the helical current collector can be chosen from any number of metals that are electrically conductive, can be formed into a wire, will survive in the operating environment (gas and operating temperature) of the fuel cell, and will stay electrically conductive under the operating conditions. It is advantageous that the metal have a high modulus of elasticity so that after being wound into a tubular spring, it can be stretched to fit inside the tubular electrode, and then sprung back to fit tightly against the inside wall of the electrode. The current collector **27** can be made using standard spring winding techniques. It is sized so that when in its normal state, the diameter of the spring coil **27** is slightly larger, such as 1.016 to 2.032 cm, as compared to the inside diameter of the tubular element **15**. When the spring coil **27** is stretched by compress it, it can be pulled through the tubular element and will spring back when released to rest tightly against the inside of the tubular element. The diameter of the wire **27** used should be selected based on current density and making sure that the helical collector **27** does not impede the flow of gas through the tubular element. The pitch can be selected to get the desired amount of contact length of the wire against the inside surface of the tubular element.

It is known that TSOFC elements can be used as reversible fuel cells, that is, used either as fuel cells for generating electricity or in their reverse state for hydrogen production. TSOFC elements such as described herein can also be used as solid oxide electrolyzers.

It is to be understood that while the invention has been described in conjunction with the preferred specific embodiments thereof, that the foregoing description as well as the examples which follow are intended to illustrate and not limit the scope of the invention. Other aspects, advantages and modifications within the scope of the invention will be apparent to those skilled in the art to which the invention pertains.

## Claims

1. A tubular electrochemical reactor (15), comprising:
a metal support tube (19) coated on the inside with a porous first electrode (21), said first electrode coated on the inside with a dense electrolyte (23), said dense electrolyte coated on the inside with a second electrode (25), wherein said second electrode provides a tubular inner surface; and a tubular spring coil current collector (27) disposed concentrically within said second electrode for conducting current out of the tubular electrochemical reactor, **characterized in that** said metal support tube (19) is porous, and
said tubular spring coil current collector (27) is in uniform contact against the inside of the tubular inner surface in a continuous or semi-continuous manner throughout the length of said tubular inner surface, said spring coil being formed from a material having an elastic modulus between 6,890 MPa and 344,500 MPa, a diameter between 1.016 cm to 2.032 cm larger in its normal state than a diameter of said inner surface, and a number of turns per cm (pitch) of 0.39 to 13.78 per cm, further comprising a ceramic tube (29) wherein said spring coil is disposed inside a bore of said ceramic tube.

2. The reactor of claim 1, wherein said number of turns is between 1.97 and 13.78.

3. The reactor of claim 1, wherein said number of turns is between 5.9 and 13.78.

4. The reactor of claim 1, wherein said elastic modulus is between 68,900 MPa and 344,500 MPa.

5. The reactor of claim 1, wherein a diameter of a wire forming said spring coil is less than 0.3175 cm.

6. The reactor of claim 1, wherein said reactor comprises a tubular solid oxide fuel cell (TSOFC).

7. The reactor of claim 1 wherein said reactor comprises a tubular solid oxide electrolyzer.

8. The reactor of claim 1, wherein said spring coil comprises platinum, palladium or silver, or an electrically conductive nickel-based alloy.

9. The reactor of claim 1, wherein an end of said spring coil is disposed inside a bore of said ceramic tube.

10. The reactor of claim 1, wherein said tubular spring coil current collector does not contact the porous first electrode or any part of the fuel cell in electrical contact with the porous first electrode.

## Patentansprüche

1. Röhrenförmiger elektrochemischer Reaktor (15), aufweisend:
ein Metalltragrohr (19), das auf der Innenseite mit einer porösen ersten Elektrode (21) beschichtet ist, wobei die erste Elektrode auf der Innenseite mit einem dichten Elektrolyt (23) beschichtet ist, wobei das dichte Elektrolyt auf der Innenseite mit einer zweiten Elektrode (25) beschichtet ist, wobei die zweite Elektrode eine röhrenförmige Innenfläche bereitstellt; und
einen röhrenförmigen Spiralfederstromkellektor (27), der konzentrisch innerhalb der zweiten Elektrode angeordnet ist, um Strom aus dem röhrenförmigen elektrochemischen Reaktor zu leiten,
**dadurch gekennzeichnet, dass**
das Metalltragrohr (19) porös ist und sich der röhrenförmige Spiralfederstromkollektor (27) in einem gleichmäßigen Kontakt gegen die Innenseite der röhrenförmigen Innenfläche in einer kontinuierlichen oder halbkontinuierlichen Weise über die Länge der röhrenförmigen Innenfläche befindet, wobei die Spiralfeder aus einem Material hergestellt ist, das einen Elastizitätsmodul zwischen 6.890 MPa und 344.500 MPa, einen Durchmesser zwischen 1,016 cm bis 2,032 cm größer in ihrem normalen Zustand als ein Durchmesser der Innenfläche und eine Windungszahl pro cm (Ganghöhe) von 0,39 bis 13,78 pro cm aufweist, ferner aufweisend ein Keramikrohr (29), in dem die Spiralfeder innerhalb einer Bohrung des Keramikrohrs angeordnet ist.

2. Reaktor nach Anspruch 1, wobei die Windungszahl zwischen 1,97 und 13,78 beträgt.

3. Reaktor nach Anspruch 1, wobei die Windungszahl zwischen 5,9 und 13,78 beträgt.

4. Reaktor nach Anspruch 1, wobei der Elastizitätsmodul zwischen 68.900 MPa und 344.500 MPa beträgt.

5. Reaktor nach Anspruch 1, wobei ein Durchmesser eines Drahts, der die Spiralfeder bildet, weniger als 0,3175 cm beträgt.

6. Reaktor nach Anspruch 1, wobei der Reaktor eine röhrenförmige Festoxid-Brennstoffzelle (TSOFC) aufweist.

7. Reaktor nach Anspruch 1, wobei der Reaktor einen röhrenförmigen Festoxid-Elektrolyseur aufweist.

8. Reaktor nach Anspruch 1, wobei die Spiralfeder Platin, Palladium oder Silber oder eine elektrisch leitfähige, nickelbasierte Legierung aufweist.

9. Reaktor nach Anspruch 1, wobei ein Ende der Spiralfeder innerhalb einer Bohrung des Keramikrohrs angeordnet ist.

10. Reaktor nach Anspruch 1, wobei der röhrenförmige Spiralfederstromkollektor die poröse erste Elektrode oder irgendeinen Teil der in elektrischem Kontakt mit der porösen ersten Elektrode stehenden Brennstoffzelle nicht berührt.

## Revendications

1. Réacteur électrochimique tubulaire (15), comprenant :
un tube de support métallique (19) recouvert à l'intérieur, avec une première électrode poreuse (21), ladite première électrode étant recouverte à l'intérieur avec un électrolyte dense (23), ledit électrolyte dense étant recouvert à l'intérieur avec une deuxième électrode (25), dans lequel la deuxième électrode fournit une surface interne tubulaire ; et un collecteur de courant à spire tubulaire (27) disposé de manière concentrique à l'intérieur de ladite deuxième électrode pour conduire le courant hors du réacteur électrochimique tubulaire, **caractérisé en ce que** :
ledit tube de support métallique (19) est poreux, et
ledit collecteur de courant à spire tubulaire (27) est en contact uniforme contre l'intérieur de la surface interne tubulaire d'une manière continue ou semi-continue tout le long de la longueur de ladite surface interne tubulaire, ladite spire étant formée à partir d'un matériau ayant un module élastique compris entre 6 890 MPa et 344 500 MPa, un diamètre compris entre 1,016 cm à 2,032 cm plus grand dans son état normal qu'un diamètre de ladite surface interne, et un nombre de tours par cm (pas) de l'ordre de 0,39 à 13,78 par cm, comprenant en outre un tube en céramique (29), dans lequel ladite spire est disposée à l'intérieur d'un alésage dudit tube en céramique.

2. Réacteur selon la revendication 1, dans lequel le nombre de tours est compris entre 1,97 et 13,78.

3. Réacteur selon la revendication 1, dans lequel ledit nombre de tours est compris entre 5,9 et 13,78.

4. Réacteur selon la revendication 1, dans lequel ledit module élastique est compris entre 68 900 MPa et 344 500 MPa.

5. Réacteur selon la revendication 1, dans lequel un diamètre d'un fil formant ladite spire est inférieur à 0,3175 cm.

6. Réacteur selon la revendication 1, dans lequel ledit réacteur comprend une pile à combustible à oxyde solide tubulaire (TSOFC).

7. Réacteur selon la revendication 1, dans lequel ledit réacteur comprend un électrolyseur à oxyde solide tubulaire.

8. Réacteur selon la revendication 1, dans lequel la spire comprend du platine, du palladium ou de l'argent ou un alliage à base de nickel électriquement conducteur.

9. Réacteur selon la revendication 1, dans lequel une extrémité de ladite spire est disposée à l'intérieur d'un alésage dudit tube en céramique.

10. Réacteur selon la revendication 1, dans lequel ledit collecteur de courant de spire tubulaire n'est pas en contact avec la première électrode poreuse ou n'importe quelle partie de la pile à combustible en contact électrique avec la première électrode poreuse.
